# EUROPÄISCHE PATENTSCHRIFT

(11) **EP 2 055 168 B1**
(45) Veröffentlichungstag und Bekanntmachung des Hinweises auf die Patenterteilung: **12.09.2012**
(21) Anmeldenummer: 08018430.2
(22) Anmeldetag: 22.10.2008
(51) Int. Cl.: A01C 17/00, A01C 7/10

(54) **Zweischeibenstreuer zum Verteilen von Mineraldünger**
Two-discs-spreader for distributing mineral fertiliser
Distributeur centrifuge à deux disques pour distribution d'engrais minéral

(30) Priorität: 30.10.2007 DE 102007051713
(43) Veröffentlichungstag der Anmeldung: 06.05.2009
(73) Patentinhaber: RAUCH LANDMASCHINENFABRIK GMBH, 76547 Sinzheim (DE)
(72) Erfinder: Rauch, Norbert, 77815 Bühl (DE); Stöcklin, Volker, 77975 Ringsheim (DE)
(74) Vertreter: Lenz, Steffen

(56) Entgegenhaltungen:
- EP-A- 0 246 575
- DE-A1- 3 500 886
- DE-A1- 19 513 423
- DE-A1-102005 011 004

## Beschreibung

Die Erfindung betrifft einen Zweischeibenstreuer zum Verteilen von Mineraldünger auf landwirtschaftlichen Flächen mit auf je einer Antriebswelle auswechselbar aufgesetzten Streuscheiben mit auf deren Oberseite angeordneten Wurfflügeln, wobei zur Anpassung an verschiedene Düngersorten und/oder Arbeitsbreiten verschiedene Streuscheibentypen einsetzbar und jeweils auf der zugehörigen Antriebswelle aufsetzbar sind und ein Bedienterminal vorgesehen ist, auf dem die maßgeblichen Betriebsdaten für den Streuvorgang, z.B. kalendarisches Datum, Düngersorte, Streumenge pro Schlag etc. eingebbar und speicherbar und mittels Datenübertragungssystem an einen standortgebundenen PC und an ein dortiges Dokumentationssystem übertragbar sind.

Zweischeibenstreuer haben sich zum Verteilen von Mineraldünger mittels Streuscheiben auf mittlere bis große Arbeitsbreiten durchgesetzt. Diese sind auf ihrer Oberseite mit einer oder mehreren Wurfflügeln besetzt, die den aus einem Düngerbehälter über zwei trichterförmige Unterteile und je einem Dosierorgan zugeteilten und auf die Streuscheibe gelangenden Dünger zentrifugal beschleunigen und am Scheibenrand oder am Ende der Wurfflügel abgeben. Die Wurfflügel können verstellbar auf der Streuscheibe angeordnet sein, um den jeweiligen Anforderungen zu genügen.

Da in der Landwirtschaft unterschiedliche Düngersorten mit unterschiedlichem Gleitverhalten auf der Streuscheibe und in den Wurfflügeln sowie unterschiedlichem Flugverhalten nach Abgabe von der Streuscheibe eingesetzt werden, müssen Vorkehrungen getroffen werden, diese für die Flugweite und damit für die Arbeitsbreite unterschiedlichen Faktoren zu berücksichtigen. Unabhängig von diesen Einflussfaktoren hängt die Arbeitsbreite neben der Drehzahl der Streuscheiben insbesondere von deren Durchmesser bzw. Länge und Winkellage der Wurfflügel ab, die die Abgangsgeschwindigkeit und Wurfrichtung der Partikel maßgeblich mitbestimmen.

Es werden deshalb bei Zweischeibenstreuern zur Anpassung an verschiedene Düngersorten und/oder Arbeitsbreiten von z.B. 12m bis 42m verschiedene Streuscheiben eingesetzt, die entweder auf dem Streuer mitgeführt oder auf dem Hof gelagert werden und vor Aufnahme der Streuarbeit auf die zugehörigen Antriebswellen aufgesetzt werden (RAUCH "Düngetechnik" Preisliste 115, August 2007, der Anmelderin).

Die EP-A-0246575 beschreibt einen Scheibenstreuer, bei dem die Streuscheiben auswechselbar auf ihren Antriebsachen sitzen. Ferner ist eine Fahrgeschwindigkeitsabhängige Regelung der Dosiermenge des Düngers beschrieben, wobei mit Hilfe eines Sensors ein Ist-/Sollwertvergleich mit einem auf einem Bedienterminal eingegebenen Sollwert für die Dosiermenge (Massenstrom) erfolgt. Dieser Stand der Technik macht keine Aussage darüber. Zu welchem Zweck die Streuscheiben ausgewechselt werden, insbesondere ob dies im Hinblick auf die Anpassung an verschiedene Düngersorten und/oder Arbeitsbreiten geschieht, und es ist insbesondere kein Erkennungssystem für die gerade eingesetzten Streuscheiben beschrieben.

Die fortschreitenden Anforderungen an die Landwirtschaft zur Dokumentation ihrer Prozesse zur Verbesserung des Umwelt- und Verbraucherschutzes erfordern lückenlose Nachweise über die Einsatzbedingungen der Landmaschinen. Für Zweischeibenstreuer zum Verteilen von Mineraldünger bedeutet dies, dass alle Betriebszustände während des Streuvorgangs hinsichtlich deren Nachverfolgbarkeit dokumentierbar sein müssen. Hierzu dient unter anderem ein Bedienterminal in welchem nach neuestem Stand der Technik die Streumengen pro Schlag, das kalendarische Datum, die Düngersorte etc. gespeichert und mittels Datenübertragungssystem an den Home-PC und das dortige Dokumentationssystem übertragen werden.

Für Zweischeibenstreuer sind bis zu sechs verschiedene Streuscheiben unterschiedlichen Typs (Durchmesser, Anzahl, Ausbildung und Anordnung der Wurfschaufeln, rechte Streuerseite, linke Streuerseite, etc.) verfügbar. Wird bei einer vorgegebenen Verteilaufgabe versehentlich ein falscher Streuscheibentyp eingesetzt oder beispielsweise die rechte Streuscheibe auf die linke Antriebsnabe aufgesetzt, ergeben sich große Streufehler mit der Folge von bedeutenden Über - und/oder Unterdüngungen, welche die Qualität und Reststoffe im Erntegut erheblich beeinflussen können. Außerdem können zu hohe Mengen von Nährstoffen ins Trinkwasser und in feldbegrenzende Wasserläufe gelangen und damit zu Umweltschäden führen.

Bisher sind die verschiedenen Streuscheibentypen und links/rechts Informationen durch auf der Unterseite der Streuscheiben angebrachte Aufkleber gekennzeichnet worden, was jedoch eine Verwechslung und insbesondere.eine rechtzeitige Erkennung der Verwechslung nicht verhindert. Zudem unterliegen solche Aufkleber einem schnellen Verschleiß.

Der Erfindung liegt die Aufgabe zugrunde, mittels eines Erkennungssystems der Streuscheiben eine Verwechslungsgefahr und/oder Vertauschungsgefahr bei dem korrekterweise einzusetzenden Streuscheibentyp zu vermeiden.

Diese Aufgabe wird erfindungsgemäß dadurch gelöst, dass nahe jeder aufgesetzten Streuscheibe ein den Streuscheibentyp erkennender Sensor vorgesehen ist, der ein den Streuscheibentyp und/oder die Drehrichtung der Streuscheibe identifizierendes Signal dem Bedienterminal zuleitet, in dem der vom Sensor übermittelte Streuscheibentyp mit dem für die angewählte Düngersorte und/oder die gewünschte Arbeitsbreite erforderlichen Streuscheibentyp auf Übereinstimmung verglichen wird.

Der erfindungsgemäß vorgesehene Sensor ist vorzugsweise im Umlaufbereich jeder Streuscheibe angeordnet, und zwar derart, dass er nicht von Düngerpartikeln getroffen wird. Der Sensor erkennt ein markantes Merkmal des eingesetzten Streuscheibentyps und sendet ein entsprechendes Signal an das Bedienterminal. Bei korrektem Einsatz der beiden Streuscheibentypen kann der Verteilvorgang ordnungsgemäß durchgeführt werden.

In einer vorteilhaften Ausführung ist vorgesehen, dass der Sensor unter der Streuscheibe angeordnet ist und sich somit im Schutz der darüber drehenden Streuscheibe befindet.

In einer bevorzugten Ausführung sind an der Unterseite jeder Streuscheibe zwei Fahnen (Auslöser, Magnet) unter unterschiedlichem Radialwinkel angeordnet und wird bei Umlauf der Streuscheibe der Zeitunterschied von einer Fahne zur anderen von dem Sensor zur Identifikation des Streuscheibentyps aufgenommen. Als Fahnen können Permanentmagnete oder ähnliche Positionsmarkierungen an der Streuscheibe vorgesehen sein. Bei gleichbleibender Drehzahl ergibt sich ein gleichbleibender Zeitunterschied. Sofern der Zweischeibenstreuer Streuscheiben mit einem drehzahlregelbaren Antrieb aufweist, wobei die Drehzahl in der Regel in Abhängigkeit von der Arbeitsbreite und der Streugutsorte eingestellt wird, sorgt ein entsprechender Korrekturfaktor für die Korrektur des vom Sensor gemessenen Zeitunterschiedes, so dass auch dann ein einwandfreies Erkennen des eingesetzten Streuscheibentyps möglich ist.

In einer weiteren bevorzugten Ausführungsform weist jede Streuscheibe ein RFID (radio-frequency-identification)-Element auf, das die Identifikation des Streuscheibentyps an das Bedienterminal sendet. Diese einfache und sichere Möglichkeit der Identifikation des Streuscheibentyps ermöglicht in der Praxis eine einfache Umsetzung des Erkennungssystems.

Mit Vorteil weist das Bedienterminal eine Anzeige für den bei dem aktuellen Streuvorgang eingesetzten Streuscheibentyp auf, so dass am Bedienterminal der Typ der eingesetzten Streuscheiben optisch feststellbar ist.

Gemäß einem weiteren Merkmal der Erfindung ist im Bedienterminal der eingesetzte Streuscheibentyp speicherbar.

Im Bedienterminal wird der übermittelte Streuscheibentyp mit dem für die angewählte Düngersorte und/oder gewünschte Arbeitsbereite vorgegebenen Streuscheibentyp verglichen und bei Abweichung beider Werte eine Alarmmeldung abgesetzt, so dass der Traktorfahrer die Streuarbeit unterbrechen und die richtige Streuscheibe aufsetzen kann.

Im Sinne der Dokumentation der Streuvorgänge ist für jede Streuarbeit in einem Feld der eingesetzte Streuscheibentyp in einem Protokoll speicherbar, so dass auch jederzeit nachträglich der feldspezifische Einsatz der Streuscheiben für einen bestimmten Verteilvorgang (Düngersorte und Arbeitsbreite) kontrollierbar ist.

In einer zweckmässigen Ausgestaltung weist jede Streuscheibe rechts/links eine eigene Identifikation auf. Dadurch kann verhindert werden, dass pro Streuerseite unterschiedliche Streuscheiben eingesetzt werden. Es ist jedoch auch möglich, dass auf die beiden Antriebsnaben Streuscheiben unterschiedlichen Typs aufgesetzt werden, beispielsweise eine Normalstreuscheibe und eine Grenzstreuscheibe. Die erfindungsgemäße Identifikation und Speicherung ermöglicht ebenfalls eine Überprüfung und Dokumentation.

Durch die rechts/links eigene Identifikation kann auch erkannt werden, ob die jeweilige Streuscheibe zur Drehrichtung der Nabe passt.

## Patentansprüche

1. Zweischeibenstreuer zum Verteilen von Mineraldünger auf landwirtschaftlichen Flächen mit auf je einer Antriebswelle auswechselbar aufgesetzten Streuscheiben mit auf deren Oberseite angeordneten Wurfflügeln, wobei zur Anpassung an verschiedene Düngersorten und/oder Arbeitsbreiten verschiedene Streuscheibentypen einsetzbar und jeweils auf der zugehörigen Antriebswelle aufsetzbar sind und ein Bedienterminal vorgesehen ist, auf dem die maßgeblichen Betriebsdaten für den Streuvorgang, z.B. kalendarisches Datum, Düngersorte, Streumenge, Arbeitsbreite etc. eingebbar und speicherbar sind, wobei nahe jeder aufgesetzten Streuscheibe ein den Streuscheibentyp erkennender Sensor vorgesehen ist, der ein den Streuscheibentyp identifizierendes Signal dem Bedienterminal zuleitet, in dem der vom Sensor übermittelte Streuscheibentyp mit dem für die ausgewählten Düngerwerte und/oder die gewünschte Arbeitsbreite erforderlichen Streuscheibentyp auf Übereinstimmung verglichen wird.

2. Zweischeibenstreuer nach Anspruch 1, **dadurch gekennzeichnet, dass** der Sensor unter der Streuscheibe angeordnet ist.

3. Zweischeibenstreuer nach Anspruch 1 oder 2, **dadurch gekennzeichnet, dass** an der Unterseite jeder Streuscheibe zumindest zwei Fahnen (Auslöser, Magnet) unter unterschiedlichem Radialwinkel angeordnet sind und bei Umlauf der Streuscheibe der Zeitunterschied von einer Fahne zur anderen von dem Sensor zur Identifikation des Streuscheibentyps aufgenommen wird.

4. Zweischeibenstreuer nach Anspruch 1, **dadurch gekennzeichnet, dass** jede Streuscheibe ein RFID (Radio-Frequency-Identification) -Element aufweist, das die Identifikation des Streuscheibentyps an das Bedienterminal sendet.

5. Zweischeibenstreuer nach einem der Ansprüche 1 bis 4, **dadurch gekennzeichnet, dass** das Bedienterminal eine Anzeige für den bei dem aktuellen Streuvorgang eingesetzten Streuscheibentyp aufweist.

6. Zweischeibenstreuer nach einem der Ansprüche 1 bis 5, **dadurch gekennzeichnet, dass** im Bedienterminal der eingesetzte Streuscheibentyp für jede Streuerseite speicherbar ist.

7. Zweischeibenstreuer nach einem der Ansprüche 1 bis 6, **dadurch gekennzeichnet, dass** im Bedienterminal der übermittelte Streuscheibentyp mit dem für die angewählte Düngersorte und/oder gewünschte Arbeitsbreite vorgegebenen Streuscheibentyp jeder Streuerseite verglichen und bei Abweichung eine Alarmmeldung abgesetzt wird.

8. Zweischeibenstreuer nach einem der Ansprüche 1 bis 7, **dadurch gekennzeichnet, dass** für die Streuarbeit in einem Feld der eingesetzte Streuscheibentyp auf jeder Streuerseite in einem Protokoll speicherbar ist.

9. Zweischeibenstreuer nach einem der Ansprüche 1 bis 8, **dadurch gekennzeichnet, dass** jede Streuscheibe eine eigene Identifikation aufweist.

10. Zweischeibenstreuer nach einem der Ansprüche 1 bis 9, **dadurch gekennzeichnet, dass** jede Streuscheibe eine Identifikation für ihre Drehrichtung aufweist.

## Claims

1. A twin disc spreader for distributing mineral fertiliser on agricultural surfaces with spreading discs each mounted replaceably on a drive shaft, with paddles arranged on top of them, wherein different types of spreading discs can be used for adapting to different types of fertiliser and/or working widths, and can each be mounted on the associated drive shaft, wherein an operating terminal is provided on which the determining operating data for the spreading process, e.g. calendar date, fertilise type, spreading volume, working width, etc. can be input and stored, wherein a sensor detecting the spreading disc type is provided close to each mounted spreading disc, which sensor transmits a signal identifying the spreading disc type to the operating terminal, in which the spreading disc type conveyed by the sensor is compared with the spreading disc type required for the selected fertiliser values and/or the required working width for correspondence.

2. The twin disc spreader according to Claim 1, **characterised in that** the sensor is arranged underneath the spreading disc.

3. The twin disc spreader according to Claim 1 or 2, **characterised in that** at least two vanes (trigger, magnet) are arranged on the underside of each spreading disc at a different radial angle and during the rotation of the spreading disc the difference in time from one vane to the other is recorded by the sensor to identify the spreading disc type.

4. The twin disc spreader according to Claim 1, **characterised in that** each spreading disc has a RFID (Radio Frequency Identification) element which transmits the identification of the spreading disc type to the operating terminal.

5. The twin disc spreader according to any one of Claims 1 to 4, **characterised in that** the operating terminal has a display for the spreading disc type used in the current spreading process.

6. The twin disc spreader according to any one of Claims 1 to 5, **characterised in that** the spreading disc type can be stored in the operating terminal for each control side.

7. The twin disc spreader according to any one of Claims 1 to 6, **characterised in that** the transmitted spreading disc type is compared with the spreading disc type on each control
side provided for the selected fertiliser type and/or desired working width, and **in that** an alarm message is generated in the event of deviation.

8. The twin disc spreader according to any one of Claims 1 to 7, **characterised in that** the spreading disc type used on each control side can be stored in a protocol for the spreading work in a field.

9. The twin disc spreader according to any one of Claims 1 to 8, **characterised in that** each spreading disc has its own identification.

10. The twin disc spreader according to any one of Claims 1 to 9, **characterised in that** each spreader disc has an identification for its direction of rotation.

## Revendications

1. Distributeur centrifuge à deux disques pour épandage d'engrais minéral sur des surfaces agricoles avec des disques d'épandage respectivement placés de façon interchangeable sur un arbre d'entraînement avec des pales d'éjection disposées sur leur côté supérieur, différents types de disque d'épandage pouvant être utilisés pour s'adapter à différentes sortes d'engrais et/ou largeurs de travail et pouvant respectivement être placés sur l'arbre d'entraînement associé et un terminal de commande étant prévu sur lequel les données de fonctionnement déterminantes pour le processus d'épandage, par exemple la date calendaire, la sorte d'engrais, la quantité épandue, la largeur de travail etc. peuvent être saisies et mémorisées, un capteur détectant le type de disque d'épandage étant prévu à proximité de chaque disque d'épandage mis en place, ledit capteur envoyant un signal identifiant le type de disque d'épandage au terminal de commande, le type de disque d'épandage transmis par le capteur étant comparé dans ledit terminal au type de disque d'épandage nécessaire pour les valeurs d'engrais sélectionnées et/ou la largeur de travail souhaitée pour vérifier s'il est adapté.

2. Distributeur centrifuge à deux disques selon la revendication 1, **caractérisé en ce que** le capteur est disposé sous le disque d'épandage.

3. Distributeur centrifuge à deux disques selon la revendication 1 ou 2, **caractérisé en ce qu'**au moins deux fanions (déclencheur, aimant) sont disposés selon différents angles radiaux au niveau du côté inférieur de chaque disque d'épandage et que la différence de temps s'écoulant d'un fanion à l'autre est enregistrée par le capteur lorsque le disque d'épandage tourne pour identifier le type de disque d'épandage.

4. Distributeur centrifuge à deux disques selon la revendication 1, **caractérisé en ce que** chaque disque d'épandage comporte un élément RFID (Radio Frequency Identification) qui envoie l'identification du type de disque d'épandage au terminal de commande.

5. Distributeur centrifuge à deux disques selon l'une quelconque des revendications 1 à 4, **caractérisé en ce que** le terminal de commande comporte un affichage pour le type de disque d'épandage utilisé au cours du processus actuel.

6. Distributeur centrifuge à deux disques selon l'une quelconque des revendications 1 à 5, **caractérisé en ce que** le type de disque d'épandage utilisé pour chaque côté du distributeur centrifuge peut être mémorisé dans le terminal de commande.

7. Distributeur centrifuge à deux disques selon l'une quelconque des revendications 1 à 6, **caractérisé en ce que** le type de disque d'épandage transmis au terminal de commande est comparé au type de disque d'épandage de chaque côté de distributeur centrifuge prédéfini pour la sorte d'engrais sélectionnée et/ou la largeur de travail souhaitée comparativement et qu'une alarme est émise en cas d'écart.

8. Distributeur centrifuge à deux disques selon l'une quelconque des revendications 1 à 7, **caractérisé en ce que** le type de disque d'épandage utilisé sur chaque côté de distributeur centrifuge peut être mémorisé dans un protocole pour le travail d'épandage relatif à un champ.

9. Distributeur centrifuge à deux disques selon l'une quelconque des revendications 1 à 8, **caractérisé en ce que** chaque disque d'épandage présente une identification propre.

10. Distributeur centrifuge à deux disques selon l'une quelconque des revendications 1 à 9, **caractérisé en ce que** chaque disque d'épandage présente une identification pour son sens de rotation.
